Europäisches Patentamt

(19) European Patent Office

Office européen des brevets

(11) Publication number: **0 445 996 A1**

## (12) EUROPEAN PATENT APPLICATION

(21) Application number: 91301754.7

(22) Date of filing: 04.03.91

(51) Int. Cl.⁵: **B01D 46/42, B01D 46/00**

(30) Priority: 03.03.90 GB 9004835

(43) Date of publication of application:
**11.09.91 Bulletin 91/37**

(84) Designated Contracting States:
**AT BE CH DE DK ES FR GB GR IT LI LU NL SE**

(71) Applicant: AIRE ENVIRONMENTAL LIMITED
Lenard House, 23 Haywra Street
Harrogate, HG1 5BJ (GB)

(72) Inventor: Bosomworth, Alan George
81 Sandholme Drive, Burley-in Wharfedale
North Yorkshire (GB)

(74) Representative: Denmark, James
5 York Place
Leeds LS1 2SD Yorkshire (GB)

(54) Improvements in air purification systems.

(57) A gas purification duct system having in sequence a contaminated region, a purification means and a clean region. The purification means is embodied in the duct system by a sealed joint which is provided with a gas at a higher pressure than the pressure in either the clean region or the contaminated region so as to form a static seal which safeguards against leakages of contaminants from the contaminated region into the clean region in the event that the joint fails.

EP 0 445 996 A1

Jouve, 18, rue Saint-Denis, 75001 PARIS

# IMPROVEMENTS IN AIR PURIFICATION SYSTEMS

The present invention relates to gas purification systems and particularly, but not exclusively, to systems which remove small solid particles such as, for example, asbestos from air.

Asbestos has in the past been used as a fireproofing material in many situations but because it has been discovered that asbestos dust presents a serious health hazard, asbestos is now being removed from many locations.

When asbestos is removed, precautions must be taken to safeguard the health of both the workers concerned in removal of the asbestos and people in the immediate vicinity. It has been the practice therefore to provide the remover with a sealed suit and breathing apparatus and to isolate the area containing the asbestos and maintain it at a pressure slightly lower than that of the surrounding atmosphere. Air must therefore be moved from the isolated area and the usual means of removal of the air is a pump attached to some sort of filter unit.

Usually the filter unit may comprise a first pre-filter for removing large particles which are situated within the isolated area, a second pre-filter which removes 95% of particles down to 5 μn in diameter and finally, a high efficiency particulate arrest or HEPA filter which removes 99.997% of the particles down to 0.3 μn in size.

The particles which are damaging to the lungs are from 3 to 20 μn in diameter.

Both the second pre-filter and the HEPA filter have in the past been situated outside the isolated area. In one arrangement, the filters have been contained in a sealed unit with air being able to pass from the contaminated side to the clean side only through the filters. However, this system is not wholly satisfactory since in the event of a failure of the seals, asbestos dust can pass to the clean side of the system and be expelled into the air.

In an attempt to prevent this, air removal equipment has been manufactured such that a space around the sides of the HEPA filter is open to the air and is isolated from both the contaminated side and the clean side by seals. Both sides of the system are maintained at a pressure lower than atmospheric pressure and therefore in the event of a failure of the seals, the pressure difference will cause clean air from the atmosphere to move into both sides of the system. The air current set up by this pressure difference will therefore prevent asbestos dust from moving around the filter to the clean side of the system.

However, for removal of asbestos from large areas, for example a whole floor of a block of flats, it is not always possible to place the HEPA filter outside the contaminated area. The safety modification described above would therefore be of no use since contaminated air rather than clean air would enter the system in the event of a seal failure if this type of equipment were used.

In a first aspect of the invention there is provided a gas purification duct system having in sequence a contaminated side, a purification means and a clean side, said purification means being embodied in the duct system by a joint means, means is also provided for supplying to the region of the joint clean air at a higher pressure than that of either the clean side or the contaminated side characterised in that the joint is sealed to form a static seal which prevents leakage of contaminants from the contaminated side to the clean side in the event of failure of the joint. Preferably the clean air is supplied from the clean side of the system.

Preferably said purification means comprises a filter.

Preferably said contaminated side is maintained at a higher pressure than said clean side.

Preferably the pressure within the joint is maintained by a pump which may or may not be capable of overcoming a leakage. The system may have a control panel having behind it a second region into which clean air is supplied from the clean side at a higher pressure than that of either the clean side or the contaminated side to prevent leakage of contaminants through said control panel.

There may be one or more pressure gauges to measure the pressure in the joint region of the air purification means and in the high pressure region behind the control panel.

Preferably the said pressure gauges will be adapted to monitor extremely small changes in pressure within the seal joint so that even the slightest leakage may be detected.

Preferably, where, as mentioned above, the pump cannot compensate for a leakage the pressure gauge when detecting a leakage will be coupled to a means for deactivating the purification system, so that when the pressure in the seal joint falls below a predefined level the purification system will be deactivated.

Preferably the pressure gauge will be coupled to a warning means.

In a second aspect of the invention there is provided a control panel for a gas purification system having in sequence a contaminated side, a purification means and a clean side, characterised in that a region behind said control panel contains clean gas supplied from the clean side of the system but at a higher pressure than the pressure of the remainder of said system

The invention may be applied to other air purification systems such as for example those used in the dismantling of nuclear installations.

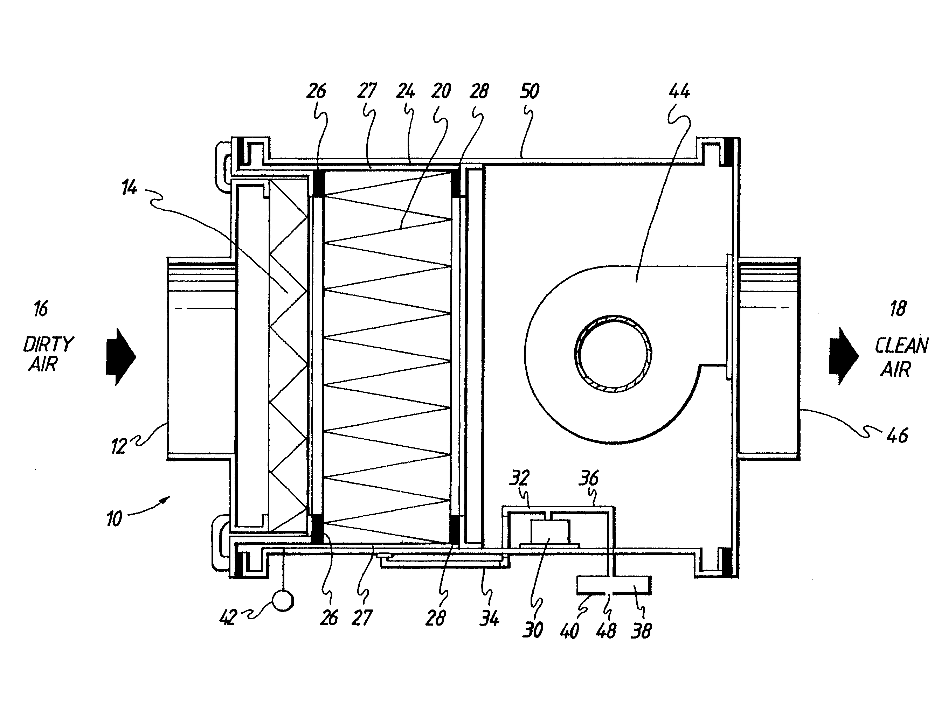

The invention will now be further described with reference to the accompanying figure which represents a sectioned diagrammatic view of an air purification system according to the invention.

An air purification system 10 comprises a contaminated side 16 and a clean side 18. The two sides are separated by a high efficiency particulate arrest (HEPA) filter 20 which removes from the air solid particles such as asbestos dust.

The contaminated side 16 of the system comprises an inlet duct 12 and a first pre-filter 14 which separates-out from the incoming air the largest of the solid particles. The first pre-filter 14 may be followed by a second pre-filter (not shown) which is sufficiently efficient to remove from the air 95% of the particles having a diameter of 5 μn or greater. However, in an alternative system, one or both of these filters may be omitted.

The HEPA filter 20 removes from the air 99.997% of particles having a diameter of 0.3 μn or more.

The filters 14 and 20 are contained in a duct 50 and a space 27 is defined between the HEPA filter 20 and a wall 24 of the duct 50. Space 27 is sealed from the contaminated side by a seal 26 and from the clean side by a seal 28.

A pump 30 positioned at the clean side of the system is connected by a first branch 32 of a duct 34 with the space 27 between the HEPA filter 20 and the duct wall 24. The pump 30 is connected by a second branch 36 of the duct 34 to a chamber 38 situated behind a control panel 40 which controls the operation of the system. A pressure gauge 42 is connected to the space 27 between the filter 20 and wall 24.

A fan 44 draws air from the clean side of the system and out into the atmosphere through an outlet duct 46.

The contaminated side 16 of the system is maintained at a pressure slightly below atmospheric pressure and the clean side 18 of the system is maintained at an even lower pressure by the action of the fan 44 moving air out through the duct 46. This pressure difference assists the action of the HEPA filter 20.

In use, the contaminated air moves into system 10 through the inlet 12 and passes through the pre-filter 14. The contaminated air then passes through the HEPA filter 20 which removes the remainder of the harmful solid particles and out through the duct 46.

As described above the HEPA filter 20 has a seal 26 isolating the space 27 around it from the contaminated side and a further seal 28, isolating the space 27 from the clean side 18. The space between the seals 26, 28 acts as a safety region and contains static clean air which is maintained at a pressure slightly higher than that of either the contaminated side 16 and the clear side 18. This pressure may be slightly above atmospheric pressure. The pump 30 pumps clean air upto a predetermined pressure into the safety region 27 from the clean side of the system 18 through branch 32 of duct 34. If either of, or both of, the seals 26, 28 begin to leak, this will be detected by pressure gauge 42 and relayed to control panel 40 which will activate either a warning means and/or the pump 30 so as to maintain the pressure in the safety region 27. This ensures that the leakage will be directed inwardly from the safety region into the purification system 10 rather than outwardly from the purification system 10 into the safety region thus ensuring that contaminated air will not be able to pass from the contaminated side 16 to the clean side 18 of the system. In an instance where the pump is not able to permanently compensate for a leakage, the control 40 will be coupled to a deactivating means such that when the pressure gauge reading falls below a predetermined level the deactivating means will be activated and the system will be shut down.

The nature of the system is such that minute changes in pressure will be detected by the pressure gauge and will serve to activate the control means in order to bring about a suitable response. It is essential to the operating of the system that even the minutest break in the seal about regions 27 or 38 (to be referred to hereinafter) will be detected and acted upon. Thus the nature of the detector means (42) and response means (30, 40) will be designed with this in mind.

In a preferred embodiment a control panel 40 is situated on the wall of the duct 50 on the clean side of the system. The whole system is situated in a contaminated external atmosphere and therefore it is important to prevent contaminated air from passing through gaps 48 in the control panel around the dials and instruments and into the clean side of the system 18. There is therefore behind the control panel 40 a chamber 38 which acts as a safety region and contains static clean air at a higher pressure than either the surrounding atmosphere or the clean side 18 of the system. In the embodiment shown in the figure where the control panel is in fluid connection with the seal 27 the pressure behind the control panel is monitored by pressure gauge 42. The clean air in chamber 38 is pumped into same from the clean side 18 of the system through branch 36 of duct 34 and by the same pump 30 which is used to pump air into the safety region 27. The safety region 38 works in a similar way to the safety region 27 in that the pressure difference between the safety region 28 and the surrounding atmosphere, ensures that any leakage will occur outwardly from the safety region 38 into the atmosphere rather than the other way about. Contaminated air is therefore prevented from entering the clean side of the system. Alternatively in an embodiment where the control panel 40 is separated from the seal 27 an additional pressure gauge (not shown) is provided. Further an additional pump (not shown) is also provided to pump clean air from side 18 into chamber 38.

In an embodiment where where the pump is not able to compensate for any leakage the pressure gauge coupled to the control panel will detect a fall in pressure and below a predetermined level the the pressure gauge will be arranged to activate a deactivating means which will shut down the system.

The system of the invention therefore provides a relatively simple way of preventing the escape of contaminated air from the contaminated side of an air purification system to the clean side. The system is especially used for when asbestos or other hazardous material must be removed from large areas making it impossible to locate the filtration system outside the contaminated area.

## Claims

1. A gas purification duct system having in sequence a contaminated side, a purification means and a clean side, said purification means being embodied in the duct system by a joint means, means is provided for supplying to the region of the joint clean air at a higher pressure than that of either the clean side or the contaminated side characterised in that the joint is sealed to form a static seal which prevents leakage of contaminants from the contaminated side to the clean side in the event of failure of the joint.

2. A purification duct system according to claim 1 wherein air is supplied from the clean side.

3. A purification duct system according to claim 1 wherein the purification means comprises a filter.

4. A purification means according to claims 1, 2 or 3 wherein the contaminated side is maintained at a higher pressure than the clean side.

5. A prufication system according ot any preceding claims wherein the static seal comprises a means for maintaining pressure in the region around the purification means.

6. A purification system according to claim 5 wherein a warning means is provided so as to be activated by a loss in pressurisation around the purification means.

7. A purification system according to claim 6 wherein the warning means is coupled to a system deactivating means.

8. A purification system according any preceding claim and including a control panel having behind it a second region into which clean air is supplied at a higher pressure than that of either the clean side or the contaminated side to prevent leakage of contaminants through said control panels.

9. A purification system according to claim 8 wherein clean air is supplied from the clean side.

10. A purification system according to any preceding claim including one or more pressure gauges to measure the pressure in the joint region of the air purification means and in the higher pressure region behind the control panel.

11. A control panel for a gas purification system having in sequence a contaminated side, a purification means and a clean side, characterised in that a sealed region behind said control panel contains static clean gas supplied from the clean side of the system but at a higher pressure than the pressure of the remainder of said system.

EP 0 445 996 A1

European Patent Office

## EUROPEAN SEARCH REPORT

Application Number

EP 91 30 1754

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A- 463 250 (TECHNCAIR S.A.) * Column 3, line 33 - column 4, line 19; figures 4,7 * --- | 1-4,9 | B 01 D 46/42 B 01 D 46/00 |
| A | DE-A-3 126 089 (W. SCHULZ) * Pages 8,9; figures 1,2 * --- | 5,6,8, 10,11 | |
| A | EP-A-0 099 212 (UNITED KINGDOM ATOMIC ENERGY AUTHORITY) --- | 1,3,4,5 | |
| A | US-A-3 880 625 (H.T. SHOOK) --- | 1,3,4 | |
| A | BE-A- 829 117 (FILTEST SOCIIETE ANONYME) --- | 1,3 | |
| A | EP-A-0 242 046 (J. THORNE) ----- | 1-5 | |

TECHNICAL FIELDS
SEARCHED (Int. Cl.5)

B 01 D

The present search report has been drawn up for all claims

| Place of search | Date of completion of the search | Examiner |
|---|---|---|
| THE HAGUE | 29-05-1991 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ............................................................
& : member of the same patent family, corresponding document

EPO FORM 1503 03.82 (P0401)